(19) **Europäisches Patentamt / European Patent Office / Office européen des brevets**

(11) **EP 3 018 450 B1**

(12) # FASCICULE DE BREVET EUROPEEN

(45) Date de publication et mention de la délivrance du brevet:
**24.06.2020 Bulletin 2020/26**

(51) Int Cl.:
**G01C 23/00** (2006.01) **G06T 17/05** (2011.01)
**G06T 19/20** (2011.01)

(21) Numéro de dépôt: **15192987.4**

(22) Date de dépôt: **04.11.2015**

(54) **PROCEDE DE REPRESENTATION D'UNE IMAGE CARTOGRAPHIQUE DANS UN SYSTEME DE VISUALISATION GEOLOCALISE PRENANT EN COMPTE LA PRECISION DE GEOLOCALISATION**

DARSTELLUNGSVERFAHREN EINES KARTOGRAFISCHEN BILDES IN EINEM GEOLOKALISIERTEN ANZEIGESYSTEM, DAS DIE PRÄZISION DER GEOLOKALISIERUNG BERÜCKSICHTIGT

METHOD FOR REPRESENTING A CARTOGRAPHIC IMAGE IN A GEOPOSITIONED VIEWING SYSTEM CONSIDERING THE GEOPOSITIONING ACCURACY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2014 FR 1402531**

(43) Date de publication de la demande:
**11.05.2016 Bulletin 2016/19**

(73) Titulaire: **THALES**
**92400 Courbevoie (FR)**

(72) Inventeurs:
- **SERVANTIE, Xavier**
  **33187 LE HAILLAN Cedex (FR)**
- **MONVOISIN, Emmanuel**
  **33187 LE HAILLAN Cedex (FR)**
- **POISSON, Didier**
  **33187 LE HAILLAN Cedex (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**EP-A2- 2 511 733    US-A1- 2002 099 528**
**US-A1- 2004 160 341    US-A1- 2011 106 345**
**US-B1- 8 560 149**

- **THEUNISSEN E ED - YOSHIZAWA MAKOTO: "FACTOS INFLUENCING THE DESIGN OF PERSPECTIVE FLIGHT PATH DISPLAYS FOR GUIDANCE AND NAVIGATION", DISPLAYS DEVICES, DEMPA PUBLICATIONS, TOKYO, JP, vol. 15, no. 4, 1 janvier 1994 (1994-01-01), pages 241-254, XP000510885, ISSN: 0141-9382, DOI: 10.1016/0141-9382(94)90072-8**

**Description**

Le domaine de l'invention est celui des systèmes de visualisation comportant des moyens d'afficher une image synthétique du paysage extérieur. L'invention s'applique tout particulièrement au domaine aéronautique mais peut s'appliquer à tout véhicule comportant des moyens d'afficher une telle image synthétique.

EP2511733 décrit un système d'aide à l'atterrissage basé sur l'utilisation de deux sources de mesures différentes, à savoir un système d'atterrissage aux instruments (ILS) et un GPS.

US8560149 décrit un système de guidage au décollage n'utilisant que des moyens de bord pour indiquer la déviation entre la direction de l'appareil et le centre de la piste de décollage.

Les aéronefs modernes possèdent généralement un système de vision synthétique dit « SVS », acronyme de « Synthetic Vision System ». Ce système permet de présenter à l'équipage une image synthétique du paysage extérieur comportant généralement des informations sur le pilotage ou la navigation. Un système SVS comporte une base de données cartographique représentative du terrain survolé, un système de géolocalisation, des moyens de calcul électroniques et un ou plusieurs dispositifs de visualisation implantés dans le cockpit de l'aéronef. Le système de géolocalisation est du type « GPS », acronyme de « Global Positioning System ». Il peut être couplé avec le système inertiel de l'appareil. L'ensemble du système de géolocalisation fournit au moins les paramètres suivants : position de l'aéronef en latitude, longitude et altitude et orientation de l'aéronef en tangage, roulis et cap et enfin, précision de la localisation.

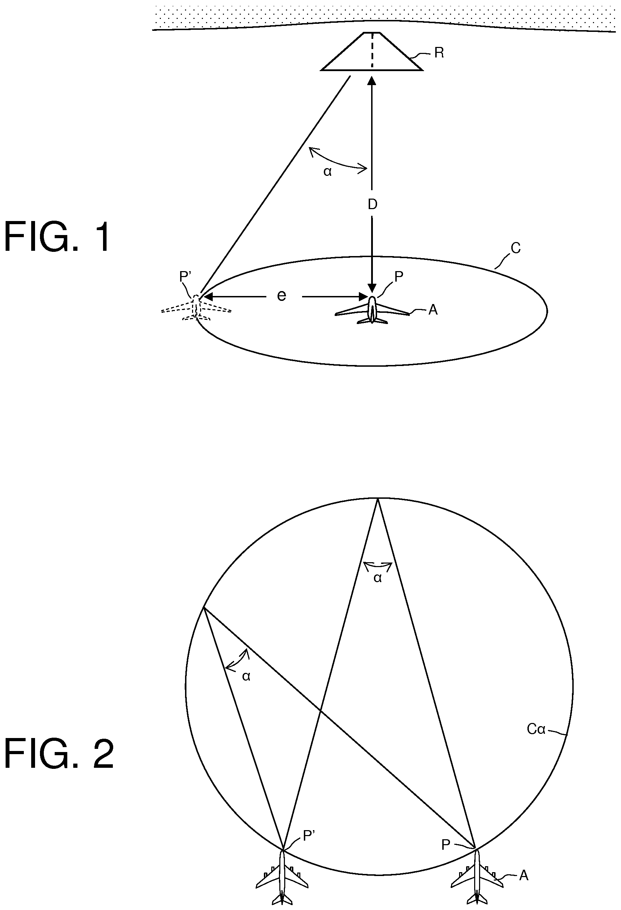

Généralement, l'image affichée est une vue tridimensionnelle de l'extérieur représentée de la façon la plus réaliste possible. Cette image est très attrayante pour l'équipage dans la mesure où elle lui fournit une vue proche de la réalité de son environnement et en particulier de certains éléments fondamentaux pour la navigation comme les pistes d'atterrissage. Un des inconvénients de cette représentation est que la précision de positionnement des éléments importants dépend, bien entendu, de la précision de la localisation de l'appareil. L'imprécision sur la position de l'appareil déforme l'image tridimensionnelle par rapport à la réalité d'une façon d'autant plus prononcée que l'information est proche de l'aéronef. Ainsi, une erreur de positionnement de quelques dizaines de mètres a une influence très forte sur des éléments disposés à quelques centaines de mètres de l'appareil alors que les informations présentées à plusieurs kilomètres ne sont que très peu impactées. Ainsi, l'image présentée peut se révéler peu précise. La figure 1 illustre ce problème. Elle représente une vue en perspective d'un aéronef A à l'approche d'une piste d'atterrissage R. La piste s trouve à une distance moyenne D de l'aéronef. L'aéronef A occupe la position P. Cependant, cette position P est connue avec une incertitude e. Ainsi, la position calculée P' de l'aéronef peut être dans un cercle de rayon e centré sur la position P. L'erreur angulaire a entre la position réelle de la piste et sa position simulée vaut donc :

$$\alpha = e/D \text{ en première approximation} \qquad \text{Equation 1}$$

Il est à noter que sur cette figure et la suivante, pour des raisons de clarté, les angles a sont délibérément grossis.

Le procédé selon l'invention permet de prendre en compte cette erreur dans l'affichage des informations cartographiques. Comme on l'a dit et comme on le voit dans l'équation 1, l'erreur angulaire a diminue avec la distance. Or, en dessous d'une certaine valeur de tolérance, l'erreur angulaire devient négligeable ou ne peut occasionner d'erreurs d'appréciation importantes. Le procédé de représentation cartographique selon l'invention part de cette constatation. Il consiste à ne représenter fidèlement que des informations sûres, c'est-à-dire situées en dessous du seuil angulaire de tolérance. Plus précisément, l'invention a pour objet un procédé de représentation d'une image cartographique dans un système de visualisation synthétique géolocalisé pour véhicule, ledit système comportant au moins une base de données cartographique représentative du terrain parcouru par le véhicule, des moyens de géolocalisation dudit véhicule, des moyens de génération graphique permettant de générer une vue synthétique tridimensionnelle dudit terrain et un dispositif de visualisation,

caractérisé en ce que la position du véhicule étant connue avec une précision déterminée, la position angulaire de chaque point de la vue synthétique étant connue avec une erreur angulaire dépendant de la distance dudit point audit véhicule et de la précision de position dudit véhicule, lorsque ladite erreur angulaire est inférieure ou égale à une tolérance angulaire prédéterminée, le point est représenté dans un mode de représentation standard et lorsque ladite erreur angulaire est supérieure à une tolérance angulaire prédéterminée, le point est représenté dans un mode de représentation d'incertitude différent du mode de représentation standard.

Avantageusement, les points représentés dans le mode de représentation d'incertitude sont tous d'une couleur uniforme.

Avantageusement, chaque premier point représenté dans le mode de représentation d'incertitude a une couleur différente de celle d'un second point équivalent représentant le même type d'objet que le premier point et représenté dans le mode de représentation standard.

Avantageusement, les points représentés dans le mode de représentation d'incertitude sont flous.

Avantageusement, le dispositif de visualisation étant agencé de façon à former la vue synthétique en superposition sur le terrain, les points représentés dans le mode de représentation d'incertitude sont représentés en semi-transparence sur ledit terrain.

Avantageusement, les points représentés dans le mode de représentation d'incertitude sont représentés sous un fond semi-transparent, la transparence étant fonction de l'erreur angulaire, lorsque l'erreur angulaire est inférieure ou égale à la tolérance angulaire prédéterminée, la transparence du fond est totale et lorsque l'erreur angulaire est supérieure à la tolérance angulaire prédéterminée, la transparence diminue jusqu'à l'opacité totale en fonction de l'accroissement de l'erreur angulaire., les points représentés n'étant plus visibles.

Avantageusement, lorsque le système de visualisation synthétique comporte un capteur d'images, les points représentés dans le mode de représentation d'incertitude sont remplacés par les points d'une image issue d'un capteur d'imagerie représentative du même terrain.

L'invention a également pour objet un système de visualisation synthétique géolocalisé pour véhicule, comportant au moins une base de données cartographique représentative du terrain parcouru par le véhicule, des moyens de géolocalisation dudit véhicule, des moyens de génération graphique permettant de générer une vue synthétique tridimensionnelle dudit terrain et un dispositif de visualisation,
caractérisé en ce que :

les moyens de géolocalisation calculent la position du véhicule avec une précision déterminée,
les moyens de génération graphique

calculent la position angulaire de chaque point de la vue synthétique avec une erreur angulaire dépendant de la distance dudit point audit véhicule et de la précision de position dudit véhicule, et
représentent, lorsque ladite erreur angulaire est inférieure ou égale à une tolérance angulaire prédéterminée, le point dans un mode de représentation standard et, lorsque ladite erreur angulaire est supérieure à une tolérance angulaire prédéterminée, le point dans un mode de représentation d'incertitude différent du mode de représentation standard.

Avantageusement, le véhicule est un aéronef.

L'invention sera mieux comprise et d'autres avantages apparaîtront à la lecture de la description qui va suivre donnée à titre non limitatif et grâce aux figures annexées parmi lesquelles :

La figure 1 déjà commentée représente une vue en perspective d'un aéronef en approche ;
La figure 2 représente un exemple de lieux de points à incertitude angulaire constante ;
La figure 3 représente une vue simplifiée d'un paysage synthétique selon l'art antérieur ;
Les figures 4 à 7 représentent différentes variantes de la vue simplifiée précédente d'un paysage synthétique selon l'invention.

Le procédé de représentation d'une image cartographique dans un système de visualisation synthétique géolocalisé selon l'invention peut s'appliquer à tous types de véhicule possédant un système de géolocalisation et une base de données cartographiques. Il est cependant particulièrement bien adapté aux aéronefs dans la mesure où la précision d'affichage des données cartographiques est fondamentale pour ce type de véhicule.

Le système de visualisation synthétique ou SVS embarqué sur aéronef selon l'invention comporte au moins une base de données cartographique, des moyens de géolocalisation, un calculateur graphique et au moins un dispositif d'affichage. Les moyens de géolocalisation sont, à titre d'exemple, de type « GPS », acronyme de « Global Positioning System » couplés/hybridés ou non avec des centrales inertielles.

Dans les aéronefs modernes, le système comporte généralement plusieurs dispositifs de visualisation disposés dans le cockpit affichant les paramètres nécessaires au pilotage et à la navigation et plus généralement, à l'accomplissement de la mission. Ces dispositifs de visualisation peuvent représenter les informations soit sans superposition sur le paysage extérieur, soit en superposition sur le paysage extérieur au moyen d'un écran ou d'un « combineur » semi-transparent qui laisse passer le paysage. Il existe différentes façons de représenter le terrain survolé. On le représente généralement par une vue cartographique tridimensionnelle. Ces vues comportent généralement des données de navigation.

Dans le cas où les données représentées sont superposées sur l'extérieur, le terrain survolé est généralement représenté en vue conforme tridimensionnelle, c'est-à-dire que les objets synthétiques représentés sont affichés à l'emplacement exact des objets réels qu'ils représentent. Par exemple, une piste synthétique est représentée, vue de l'utilisateur, à l'emplacement exact de la piste réelle qu'elle représente.

Comme on l'a dit, la position de l'aéronef étant connue avec une précision déterminée, la position angulaire de chaque point du paysage est connue avec une incertitude angulaire a dont la valeur est déterminée par l'équation 1. Il est alors possible de déterminer le lieu des points ayant une incertitude angulaire égale ou supérieure à seuil déterminé. A titre d'exemple, la figure 2 représente le lieu Ca de ces points dans un plan de coupe horizontal. C'est un cercle de diamètre Φ égal à e/tan($\alpha$). Si l'incertitude angulaire a représente la tolérance angulaire acceptable pour que le point soit représenté avec une marge d'incertitude suffisamment faible pour être représentatif de la position réelle, alors tous les points à l'extérieur du cercle peuvent être représentés sans difficulté selon un mode de représentation que l'on notera standard. Tous les points à l'intérieur du cercle présentent une incertitude de position trop importante. Dans ce cas, le procédé selon l'invention les représente différemment pour avertir l'utilisateur que ces points présentent une difficulté. La tolérance angulaire requise est généralement faible, de l'ordre de quelques milliradians. Elle correspond sur un écran de visualisation haute résolution tout au plus à quelques pixels.

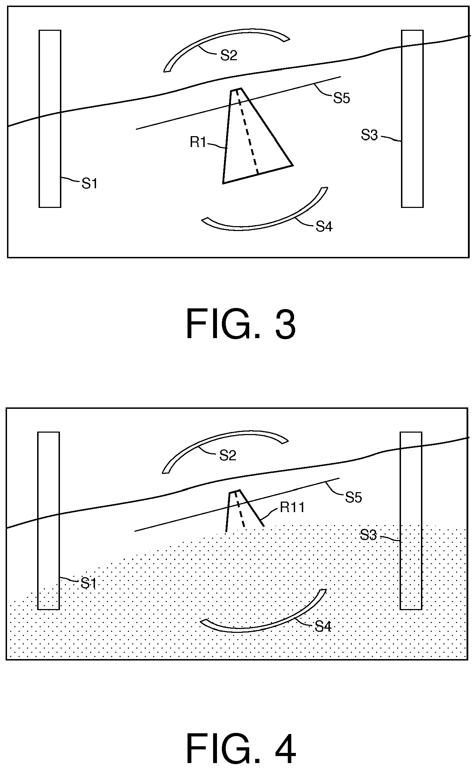

A titre d'exemple non limitatif, la figure 3 représente une vue simplifiée d'un paysage synthétique selon l'art antérieur et les figures 4 à 7 représentent différentes variantes selon l'invention de la même vue simplifiée dans un dispositif de visualisation comportant un écran ou un combiner semi-transparent.

Cette vue simplifiée comporte des symboles et des informations S1, S2, S3, S4 et S5 concernant le pilotage ou la navigation. Classiquement, ces informations concernent l'altitude, la vitesse ou l'attitude de l'appareil. Elle comporte également la représentation d'une piste synthétique R1 qui apparaît sous la forme d'un trapèze incliné. Selon l'art antérieur représenté sur la figure 3, cette piste est constituée de traits gras uniformes.

On suppose qu'une première partie R11 de cette piste est à une distance telle que cette première partie est sous le seuil de tolérance angulaire et qu'une seconde partie R12 de cette piste est à une distance telle que cette seconde partie est au-dessus du seuil de tolérance angulaire. Dans ce cas, la première partie est représentée selon le mode de représentation standard et la seconde partie est représentée de façon différente.

Il existe différentes variantes de représentation de cette seconde partie. Dans un premier mode de représentation illustré en figure 4, les points représentés dans le mode de représentation d'incertitude sont tous d'une couleur uniforme. Dans ce cas, la seconde partie disparaît. Seule apparaît la première partie R11.

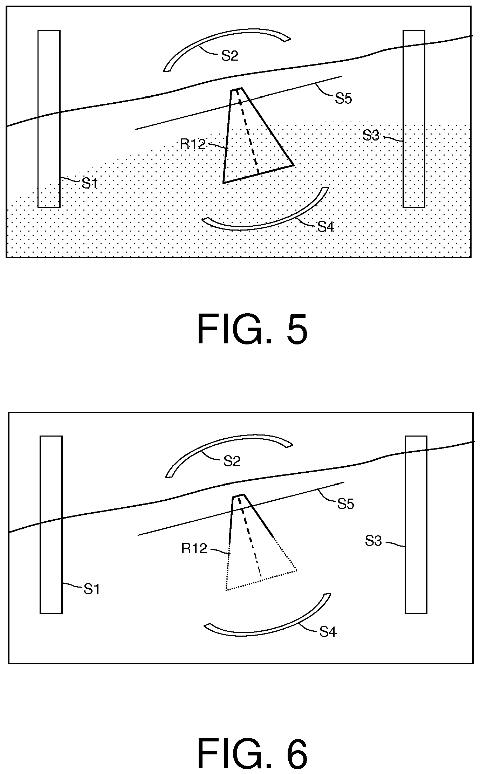

Dans un second mode de représentation illustré en figure 5, les points représentés dans le mode de représentation d'incertitude sont tous d'une couleur semi-transparente. Dans ce cas, la seconde partie R12 apparaît dans cette zone semi-transparente.

Dans un troisième mode de représentation illustré en figure 6, la seconde partie R12 est représentée avec des traits semi-transparents ou des traits de couleur différente. Dans une variante de ce mode de représentation, les points sont représentés sous un fond semi-transparent, la transparence étant fonction de l'erreur angulaire. Lorsque l'erreur angulaire est inférieure ou égale à la tolérance angulaire prédéterminée, la transparence du fond est totale et il n'apparaît pas. Lorsque l'erreur angulaire est supérieure à la tolérance angulaire prédéterminée, la transparence diminue jusqu'à l'opacité totale en fonction de l'accroissement de l'erreur angulaire, les points représentés n'étant plus alors visibles.

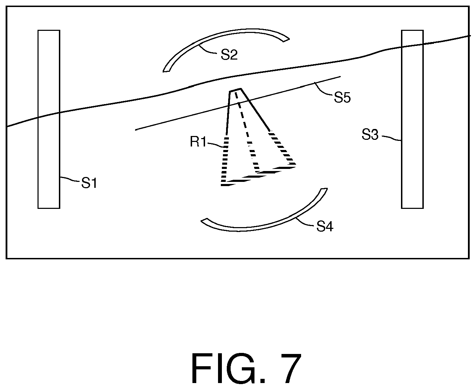

Dans un quatrième mode de représentation illustré en figure 7, la seconde partie R12 est représentée en traits flous.

Bien entendu, il est possible de combiner ces différents effets de représentation. Le critère est que l'utilisateur doit percevoir sans ambiguïté, c'est-à-dire avec un contraste suffisant, que la zone représentée est au-dessus ou au dessous du seuil de tolérance.

Enfin, dans une dernière variante, la zone des points situés au dessus du seuil de tolérance angulaire est remplacée par une image issue d'un capteur d'imagerie représentative du même terrain. Ce capteur peut être un capteur d'images à bas niveau de lumière ou une caméra infrarouge.

**Revendications**

1. Procédé de représentation d'une image cartographique dans un système de visualisation synthétique géolocalisé pour aéronef, ledit système consistant en une base de données cartographique représentative du terrain parcouru par le véhicule, des moyens de géolocalisation dudit aéronef, des moyens de génération graphique permettant de générer une vue synthétique tridimensionnelle dudit terrain et un dispositif de visualisation, **caractérisé en ce que** la position de l'aéronef donnée par lesdits moyens de géolocalisation étant connue avec une précision déterminée (e), la position angulaire de chaque point de la vue synthétique étant connue avec une erreur angulaire ($\alpha$) dépendant de la distance (D) dudit point audit aéronef et de la précision de position dudit aéronef, lorsque ladite erreur angulaire est inférieure ou égale à une tolérance angulaire prédéterminée, le point est représenté dans un mode de représentation standard et lorsque ladite erreur angulaire est supérieure à une tolérance angulaire prédéterminée, le point est représenté dans un mode de représentation d'incertitude différent du mode de représentation standard.

2. Procédé de représentation selon la revendication 1, **caractérisé en ce que** les points représentés dans le mode de représentation d'incertitude sont tous d'une couleur uniforme.

**3.** Procédé de représentation selon la revendication 1, **caractérisé en ce que** chaque premier point représenté dans le mode de représentation d'incertitude a une couleur différente de celle d'un second point équivalent représentant le même type d'objet que le premier point et représenté dans le mode de représentation standard.

**4.** Procédé de représentation selon la revendication 1, **caractérisé en ce que** les points représentés dans le mode de représentation d'incertitude sont flous.

**5.** Procédé de représentation selon la revendication 1, **caractérisé en ce que**, le dispositif de visualisation étant agencé de façon à former la vue synthétique en superposition sur le terrain, les points représentés dans le mode de représentation d'incertitude sont représentés en semi-transparence sur ledit terrain.

**6.** Procédé de représentation selon la revendication 1, **caractérisé en ce que** les points représentés dans le mode de représentation d'incertitude sont représentés sous un fond semi-transparent, la transparence étant fonction de l'erreur angulaire, lorsque l'erreur angulaire est inférieure ou égale à la tolérance angulaire prédéterminée, la transparence du fond est totale et lorsque l'erreur angulaire est supérieure à la tolérance angulaire prédéterminée, la transparence diminue jusqu'à l'opacité totale en fonction de l'accroissement de l'erreur angulaire, les points représentés n'étant plus visibles.

**7.** Procédé de représentation selon la revendication 1, **caractérisé en ce que**, lorsque le système de visualisation synthétique comporte un capteur d'images, les points représentés dans le mode de représentation d'incertitude sont remplacés par les points d'une image issue d'un capteur d'imagerie représentative du même terrain.

**8.** Système de visualisation synthétique géolocalisé pour aéronef, consistant en une base de données cartographique représentative du terrain parcouru par l'aéronef, des moyens de géolocalisation dudit aéronef, des moyens de génération graphique permettant de générer une vue synthétique bidimensionnelle ou tridimensionnelle dudit terrain et un dispositif de visualisation,
**caractérisé en ce que** :

les moyens de géolocalisation calculent la position de l'aéronef avec une précision déterminée,
les moyens de génération graphique

calculent la position angulaire de chaque point de la vue synthétique avec une erreur angulaire dépendant de la distance dudit point audit aéronef et de la précision de position dudit aéronef, et
représentent, lorsque ladite erreur angulaire est inférieure ou égale à une tolérance angulaire prédéterminée, le point dans un mode de représentation standard et, lorsque ladite erreur angulaire est supérieure à une tolérance angulaire prédéterminée, le point dans un mode de représentation d'incertitude différent du mode de représentation standard.

**Patentansprüche**

**1.** Verfahren zur Darstellung eines kartografischen Bildes in einem geolokalisierten synthetischen Anzeigesystem für ein Luftfahrzeug, wobei das System aus einer kartografischen Datenbank, welche das durch das Fahrzeug durchquerte Gelände darstellt, aus Geolokalisierungsmitteln des Luftfahrzeugs, aus Mitteln zur Grafikerzeugung, die es ermöglichen, eine synthetische dreidimensionale Ansicht des Geländes zu erzeugen und aus einer Anzeigevorrichtung besteht,
**dadurch gekennzeichnet, dass** die Position des Luftfahrzeugs, welche durch die Geolokalisierungsmittel angegeben wird, mit einer bestimmten Genauigkeit (e) bekannt ist, dass die Winkelposition eines jeden Punktes der synthetischen Ansicht mit einem Winkelfehler ($\alpha$) bekannt ist, welcher von der Entfernung (D) des Punktes zu dem Luftfahrzeug und von der Positionsgenauigkeit des Luftfahrzeugs abhängig ist, wenn der Winkelfehler kleiner als oder gleich einer vorbestimmten Winkeltoleranz ist, der Punkt in einem Standarddarstellungsmodus dargestellt wird, und wenn der Winkelfehler größer als eine vorbestimmte Winkeltoleranz ist, der Punkt in einem Ungewissheits-Darstellungsmodus dargestellt wird, welcher sich vom Standarddarstellungsmodus unterscheidet.

**2.** Darstellungsverfahren nach Anspruch 1, **dadurch gekennzeichnet, dass** die im Ungewissheits-Darstellungsmodus dargestellten Punkte allesamt eine einheitliche Farbe aufweisen.

**3.** Darstellungsverfahren nach Anspruch 1, **dadurch gekennzeichnet, dass** jeder erste in dem Ungewissheits-Darstellungsmodus dargestellte Punkt eine andere Farbe aufweist als diejenige eines zweiten gleichwertigen Punktes, welcher denselben Objekttyp darstellt wie der erste Punkt und im Standarddarstellungsmodus dargestellt wird.

4. Darstellungsverfahren nach Anspruch 1, **dadurch gekennzeichnet, dass** die im Ungewissheits-Darstellungsmodus dargestellten Punkte unscharf sind.

5. Darstellungsverfahren nach Anspruch 1, **dadurch gekennzeichnet, dass**, da die Anzeigevorrichtung angeordnet ist, um die das Gelände überlagernde synthetische Ansicht zu bilden, die in dem Ungewissheits-Darstellungsmodus dargestellten Punkte auf dem Gelände halbtransparent dargestellt werden.

6. Darstellungsverfahren nach Anspruch 1, **dadurch gekennzeichnet, dass** die im Ungewissheits-Darstellungsmodus dargestellten Punkte unter einem halbtransparenten Hintergrund dargestellt werden, wobei, indem die Transparenz vom Winkelfehler abhängt, wenn der Winkelfehler kleiner als oder gleich der vorbestimmten Winkeltoleranz ist, die Hintergrundtransparenz vollständig ist, und wenn der Winkelfehler größer als die vorbestimmte Winkeltoleranz ist, die Transparenz bis hin zu vollständiger Undurchsichtigkeit dem Anstieg des Winkelfehlers entsprechend abnimmt, sodass die dargestellten Punkte nicht mehr sichtbar sind.

7. Darstellungsverfahren nach Anspruch 1, **dadurch gekennzeichnet, dass**, wenn das synthetische Anzeigesystem einen Bildsensor beinhaltet, die im Ungewissheits-Darstellungsmodus dargestellten Punkte durch die Punkte eines Bildes ersetzt werden, welches aus einem Bildgebungssensor stammt, welcher dasselbe Gelände darstellt.

8. System zur geolokalisierten synthetischen Anzeige für ein Luftfahrzeug, wobei das System aus einer kartografischen Datenbank, welche das durch das Luftfahrzeug durchquerte Gelände darstellt, aus Geolokalisierungsmitteln des Luftfahrzeugs, aus Mitteln zur Grafikerzeugung, die es ermöglichen, eine synthetische zweidimensionale oder dreidimensionale Ansicht des Geländes zu erzeugen und aus einer Anzeigevorrichtung besteht,
**dadurch gekennzeichnet, dass**:

die Geolokalisierungsmittel die Position des Luftfahrzeugs mit einer bestimmten Genauigkeit berechnen,
die Mittel zur Grafikerzeugung
die Winkelposition eines jeden Punktes der synthetischen Ansicht mit einem Winkelfehler berechnen, welcher von der Entfernung des Punktes zum Luftfahrzeug und von der Positionsgenauigkeit des Luftfahrzeugs abhängt, und
den Punkt, wenn der Winkelfehler kleiner als oder gleich einer vorbestimmten Winkeltoleranz ist, in einem Standarddarstellungsmodus darstellen, und wenn der Winkelfehler größer als eine vorbestimmte Winkeltoleranz ist, den Punkt in einem Ungewissheits-Darstellungsmodus darstellen, welcher sich vom Standarddarstellungsmodus unterscheidet.

## Claims

1. A method for representing a cartographic image in a geolocated synthetic viewing system for aircraft, said system consisting of a cartographic database representing the terrain crossed by the vehicle, means for geolocating said aircraft, means for graphical generation allowing a three-dimensional synthetic view of said terrain to be generated and a display device,
**characterised in that** the position of the aircraft provided by said geolocation means is known with a predetermined level of precision (e), the angular position of each point of the synthetic view is known with an angular error ($\alpha$) dependent on the distance (D) from said point to said aircraft and on the positional precision of said aircraft, when said angular error is less than or equal to a predetermined angular tolerance, the point is represented in a standard representation mode and when said angular error is greater than a predetermined angular tolerance, the point is represented in an uncertainty representation mode that differs from the standard representation mode.

2. The representation method as claimed in claim 1, **characterised in that** the points represented in the uncertainty representation mode all have a uniform colour.

3. The representation method as claimed in claim 1, **characterised in that** each first point represented in the uncertainty representation mode has a different colour from that of an equivalent second point representing the same type of object as the first point and represented in the standard representation mode.

4. The representation method as claimed in claim 1, **characterised in that** the points represented in the uncertainty representation mode are blurred.

5. The representation method as claimed in claim 1, **characterised in that**, with the display device being arranged so as to form the synthetic view as an overlay on the terrain, the points represented in the uncertainty representation mode are semi-transparently represented on said terrain.

6. The representation method as claimed in claim 1, **characterised in that** the points represented in the uncertainty representation mode are represented under a semi-transparent background, with the transparency depending on the angular error, when the angular error is less than or equal to the predetermined angular tolerance, the background transparency is complete and when the angular error is greater than the predetermined angular tolerance, the transparency decreases to total opacity according to the increase in the angular error, with the represented points no longer being visible.

7. The representation method as claimed in claim 1, **characterised in that**, when the synthetic display system comprises an image sensor, the points represented in the uncertainty representation mode are replaced by the points of an image originating from an imaging sensor representing the same terrain.

8. A geolocated synthetic viewing system for aircraft, consisting of a cartographic database representing the terrain crossed by the aircraft, means for geolocating said aircraft, means for graphical generation allowing a two-dimensional or three-dimensional view of said terrain to be generated and a display device,
**characterised in that**:

the geolocation means compute the position of the aircraft with a determined level of precision;
the graphical generation means
compute the angular position of each point of the synthetic view with an angular error dependent on the distance from said point to said aircraft and on the positional precision of said aircraft; and
represent, when said angular error is less than or equal to a predetermined angular tolerance, the point in a standard representation mode and, when said angular error is greater than a predetermined angular tolerance, the point in an uncertainty representation mode different from the standard representation mode.

FIG. 1

FIG. 2

# FIG. 3

# FIG. 4

# FIG. 5

# FIG. 6

# FIG. 7

**EP 3 018 450 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2511733 A
- US 8560149 B